# EUROPEAN PATENT APPLICATION

(11) **EP 0 652 520 A1**
(43) Date of publication of application: **10.05.1995**
(21) Application number: 94308133.1
(22) Date of filing: 04.11.1994
(51) Int. Cl.: G06F 12/08

(54) **Cache control system for managing validity status of data stored in a cache memory**

(30) Priority: 09.11.1993 US 150662
(71) Applicant: INTERNATIONAL BUSINESS MACHINES CORPORATION, Armonk, N.Y. 10504 (US)
(72) Inventor: Breternitz, Mauricio, Dr. Jnr., Austin, Texas 78759 (US)
(74) Representative: Lloyd, Richard Graham

(57) **Abstract**

A method and system in a data processing system are disclosed for efficiently managing validity status of data stored in a cache memory array. The cache memory array includes a plurality of rows and columns, wherein each row includes a tag portion, a status portion, and a data portion. A tag register is established and a selected search tag is stored within the tag register. The selected search tag is indicative of the validity status of the data portion stored within each row of the cache memory array. A column of tag data is then read from the tag portion of each row of the cache memory array. The column of tag data is then logically combined with the selected search tag to form a column of status data indicative of the validity status of the data portion of each row. Finally, the column of status data is written to a column within the status portion of each row in the cache memory array, thereafter indicating the validity status of the data portion within each row utilizing a single write to the status portion of the cache memory array.

## Description

The present invention relates in general to the management of cache memory and more particularly to invalidating selected memory locations within a cache memory system.

In an attempt to reach the long-standing goal of increasing central processing unit (CPU) performance, data processing system designers have made use of various cache memory configurations to substantially reduce CPU "wait states." A wait state occurs when the CPU idly waits for other components, such as a main memory operating at a slower speed, to provide instructions and/or data requested by the CPU. During such a wait state, CPU activity is suspended for one or more clock cycles. The introduction of wait states can severely reduce the performance of even the fastest CPU integrated circuits.

One known method of reducing the introduction of wait states is to utilize faster random access memory or "RAM" integrated circuits in the main memory of the data processing system. However, such faster RAM is very expensive and considerably raises the cost of a data processing system. Another known method of reducing the introduction of wait states is to utilize sophisticated memory management techniques such as "memory caching." In memory caching, only a small portion of the data processing system's memory is made up of very fast, expensive memory integrated circuits.

A cache memory is an auxiliary memory that provides a buffering capability by which the relatively slow and increasingly large main memory may interface with the CPU at the processor cycle time in order to optimize CPU performance by improving effective data transfer rates. Cache memory comprises a small, relatively fast access memory which is interposed between a larger, relatively slow main system memory. In many applications, the existence of cache memory is essentially hidden or "transparent" to both the CPU and the data processing system user.

Typically, cache memory is managed by control logic which is designed to load the cache memory with information which is most frequently accessed by the CPU as directed by a computer application program. The cache memory control logic must also make space available for new information or clear out old information which is no longer needed by the application program. Therefore, cache management procedures necessarily include selectively invalidating rows of data in the cache memory.

This process of making new memory space available and clearing out old information by selectively invalidating rows of data in cache memory may be referred to as maintaining cache coherence. The process of maintaining cache coherence may be implemented in hardware, however, this solution adds to system cost. Cache coherence may also be maintained by a process implemented in software. However, such a software solution has the drawback of reducing system performance.

In the prior art, selective invalidation of cache memory locations required a computationally expensive associative search on the cache contents. This associative search necessarily requires a duration of time which is proportional to the size of the cache memory. Therefore, an associative search is not efficient for most useful cache sizes. Furthermore, the duration of a full associative search may vary with different data processing system designs having different cache sizes. This prevents software applications from being able to predict the duration for a given associative search of cache. The inability to predict the execution times for cache searches reduces the usefulness of cache memory when utilized in real-time systems. Such time variations in the duration of an associative search of cache memory may also lead to poor load balance and thus less effective performance in multiprocessing systems.

This invention is directed to the provision of an improved method and system for managing cache memory.

Accordingly, the invention provides a cache control system for managing validity status of data stored in a cache memory array, said cache memory array having a plurality of rows and columns, each of said rows having a tag portion, a status portion, and a data portion, said system comprising: a tag register; means for storing a selected search tag within said tag register, said selected search tag indicative of a validity status of said data portion of each row; means for reading a column of tag data from said tag portion of each row of said cache memory array; means for logically combining said column of tag data with said selected search tag to form a column of status data indicative of a validity status of said data portion of each row in said cache memory array; and means for writing said column of status data to a column within said status portion of each row of said cache memory array, whereby said validity status of each data portion within each row of said cache memory array may be indicated by a single write to said cache memory array.

This provides an improved method and system for efficiently invalidating selected memory locations within a cache memory system and for searching and selecting memory locations within a cache memory system and subsequently modifying a validity status associated with selected rows of data stored in the cache memory array.

The efficiency of a selective invalidation operation within a cache memory system is greatly enhanced by reducing the number of times a software program for managing cache coherence must access the cache memory array to perform the operation of modifying status data which is indicative of the validity status of an associated row of data in the cache memory array.

In a particular embodiment a method and system in a data processing system are disclosed for efficiently managing validity status of data stored in a cache memory array. The cache memory array includes a plurality of rows and columns, wherein each row includes a tag portion, a status portion, and a data portion. A tag register is established and a selected search tag is stored within the tag register. The selected search tag is indicative of the validity status of the data portion stored within each row of the cache memory array. A column of tag data is then read from the tag portion of each row of the cache memory array. The column of tag data is then logically combined with the selected search tag to form a column of status data indicative of the validity status of the data portion of each row. Finally, the column of status data is written to a column within the status portion of each row in the cache memory array, thereafter indicating the validity status of the data portion within each row utilizing a single write to the status portion of the cache memory array.

An embodiment of the invention will now be described by way of example only, with reference to the accompanying drawings wherein:
Figure 1 is a pictorial representation of a data processing system;
Figure 2 depicts a cache memory system interposed between a central processing unit and a main memory, as may be implemented within the data processing system of Figure 1;
Figure 3 is a high-level block diagram illustrating further details of the cache memory system of Figure 2; and
Figure 4 depicts a high-level logic flowchart illustrating the management of the validity status of data stored in a cache memory array.

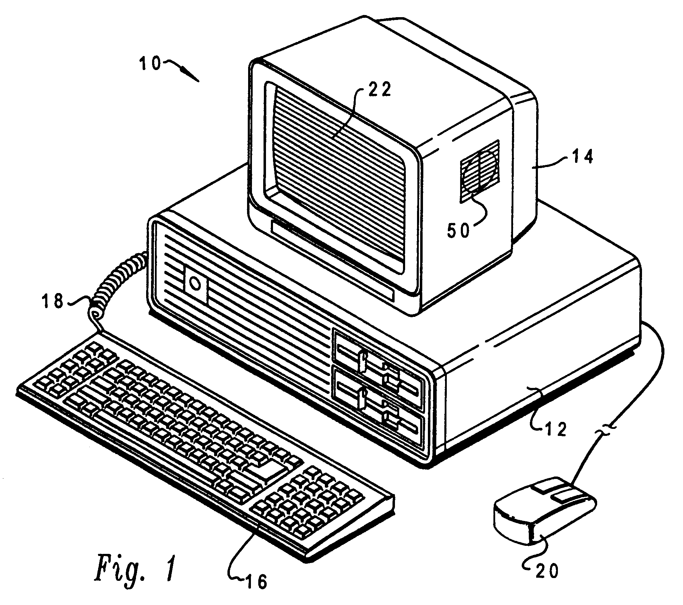

With reference to Figure 1, there is depicted a pictorial representation of a data processing system 10. As is illustrated, data processing system 10 preferably includes a processor module 12 and a display 14. Keyboard 16 is coupled to processor module 12 by means of cable 18 in a manner well known in the art. Also coupled to processor module 12 is mouse 20.

Display 14 includes a display screen 22 and a speaker 50. Those skilled in the art will appreciate that data processing system 10 may be implemented utilizing any so-called "personal computer," such as the personal computer sold under the trademark "PS/2" and which is manufactured and distributed by International Business Machines Corporation.

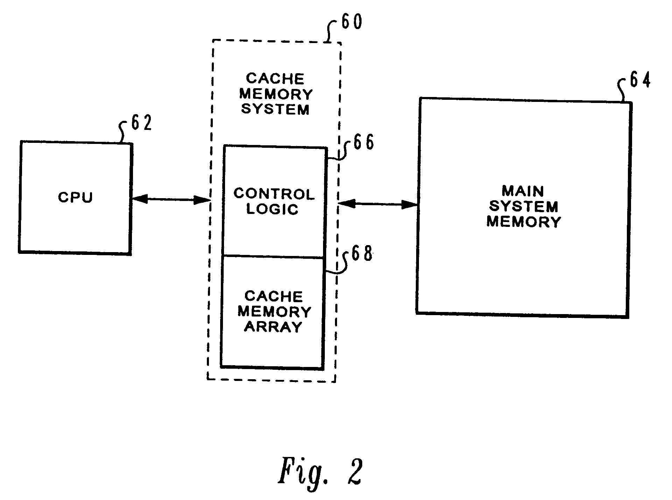

With reference now to Figure 2, there is depicted a high-level block diagram of a cache memory system 60 interposed between a CPU 62 and a main system memory 64. CPU 62 may be implemented utilizing a single processor or multiple processors operating in parallel. Main system memory 64 is typically implemented utilizing static random access memory (SRAM) integrated circuits or dynamic random access memory (DRAM) integrated circuits, which operate with a slower cycle time than the cycle time of the CPU. That is, main system memory 64 will usually not be able to provide CPU 62 with requested information without causing CPU 62 to invoke a wait state.

Cache memory system 60 is preferably comprised of control logic 66 and cache memory array 68. The function of control logic 66 is to determine which portions of main system memory 64 should be copied to cache memory array 68 in order to anticipate the next data request from CPU 62. Control logic 66 organizes the data within cache memory array 68 for efficient processing. When cache memory array 68 is full, controller 66 determines which sectors may be discarded. In some situations, control logic 66 may be required to discard selected portions of information stored within cache memory array 68 based upon the contents of the memory locations within cache memory array 68. In this embodiment, cache memory system 60 is an "associative" or "tag cache."

Upon reference to Figure 2, those persons skilled in the art will appreciate that cache memory system 60 performs a buffering function by storing selected information copied from main system memory 64 so that CPU 62 may retrieve this information without wasting processor cycles waiting for memory to respond with requested information.

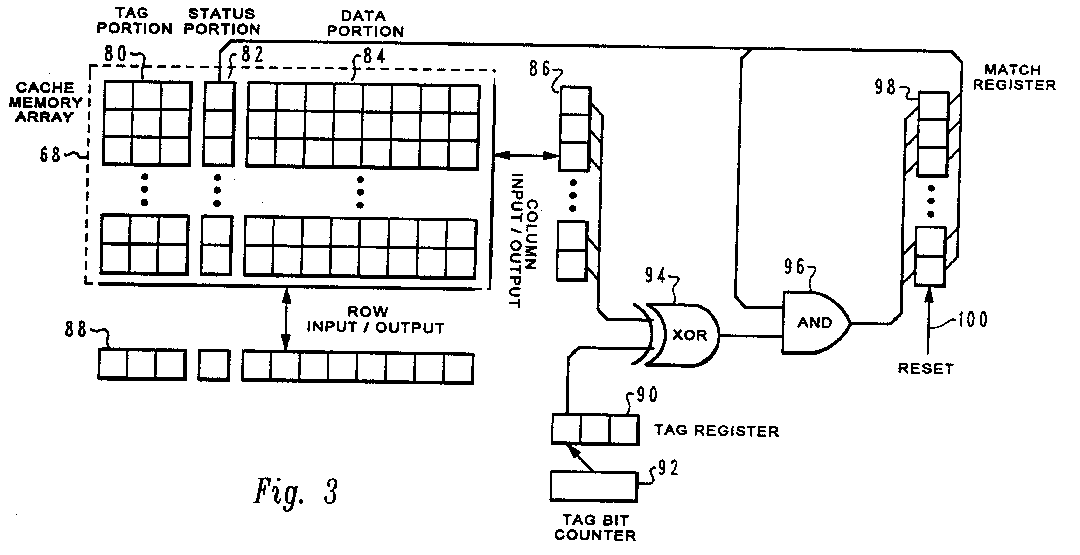

Referring now to Figure 3, there is depicted a high-level block diagram illustrating further details of the cache memory system of Figure 2. As illustrated, cache memory array 68 is comprised of a plurality of rows and columns. The rows of cache memory array 68 are divided into at least three portions: a tag portion 80, a status portion 82, and a data portion 84. As shown in Figure 3, tag portion 80 comprises three bits, status portion comprises one bit, and data portion 84 comprises eight bits. Those persons skilled in the art should recognize that the number of bits allocated to any of these portions within cache memory array 68 may be varied. For example, if status portion 82 includes two bits, one of such bits may be utilized to indicate validity of the data in the same row for one of multiple software applications, or for one of multiple processors, while the other of such bits may be utilized to indicate validity for another software application or processor.

Cache memory array 68 may be accessed in a normal, random-access mode and in a second memory mode that permits an entire bit slice, or column, to be accessed in a single read or write operation. Thus, in the normal random access mode, data may be written to, or read from, a row, or what may be referred to as a "word cell," within cache memory array 68. Similarly, in the secondary memory mode, or "bit slice" mode, an entire column of data bits, which extends across each of the plurality of rows, may be written to or read from cache memory array 68. Row input/output register 86 is utilized to read from and write to the plurality of rows within cache memory array 68. Column input/output register 88 is utilized to read from, and write to, a column of data within cache memory array 68.

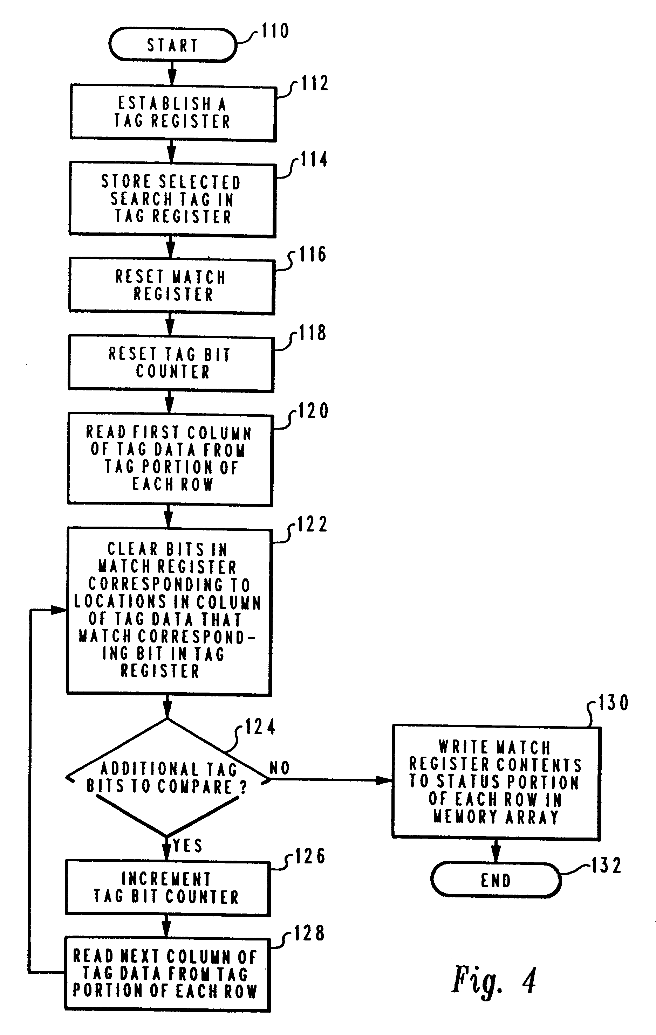

Tag register 90 is utilized to store a selected search tag which will be compared to the tag portion 80 of each row in a manner described in greater detail below. Tag bit counter 92 is utilized to point to a selected bit within tag register 90 as indicated by the arrow extending from tag bit counter 92 to tag register 90. EXCLUSIVE-OR gate 94 and AND gate 96 are utilized to logically combine a column of tag data, read from tag portion 80, with a data bit stored in tag register 90 in a manner described in greater detail with reference to Figure 4 below. Match register 98 is utilized to compute and store the result of logically combining column input/output register 86 with a selected data bit within tag register 90. Match register 98 may be reset by reset signal 100, which sets all data bits within match register 98 to all ones. Data stored within match register 98 may be written into status portion 82 of cache memory array 68 utilizing a single write operation.

Finally, referring to Figure 4, there is depicted a high-level logic flowchart illustrating the management of validity status of data stored in a cache memory array. As illustrated, the flowchart begins at block 110, and thereafter passes to block to block 112. Block 112 illustrates the process of establishing a tag register. The tag register, such as tag register 90 of Figure 3, should contain the same number of data bits as will be searched in the tag portion of cache memory array 68. In the present example, tag register 90 contains three bits, corresponding to the three bits of tag portion 80. Those persons skilled in the art should recognize that the number of bits in tag register 90 may be varied, and that the number of bits in tag register 90 may be less than the number of bits in tag portion 80, if less than the entire number of data bits in tag portion 80 will be utilized in a search of cache memory array 68.

Next, as depicted at block 114, the process stores a selected search tag in the tag register. Such a selected search tag will be utilized to locate rows within cache memory array 68 that will have an associated validity status bit set to reflect an invalid state.

Next, as illustrated at block 116, the process resets match register 98 (see Figure 3) so that the data contained in match register 98 is all ones. The match register is utilized to supply data to, and store the results of, logical computations.

Thereafter, the process resets tag bit counter 92 (see Figure 3), as depicted at block 118. Tag bit counter 92 "points to" a data bit within tag register 90. When tag bit counter 92 is reset, tag bit counter points to the most significant bit of tag register 90.

After the tag bit counter has been reset, the process reads the first column of tag data from the tag portion of each row, as illustrated at block 120. In this operation, the most significant bit of tag portion 80 (see Figure 3) in each row of cache memory array 68 is read into column input/output register 86 concurrently. This is accomplished utilizing the "bit slice" mode to access cache memory array 68.

After reading the first column of tag data, the process clears the data bits in match register 98 which corresponds to locations in the column of tag data that match the corresponding bit in the tag register. For example, if, during the first comparison of data in tag register 90 and data in column input/output register 86, the most significant bit of tag register 90 is a one and the top most data bit in column input/output register 86 is a zero, then the top most data bit of match register 98 will not be cleared, or will not be set to zero. Conversely, if the most significant bit of tag register 90 is one and the top most bit in column input/output register 86 is one, then the top most bit in match register 98 is cleared, or set to zero, after initially being reset to a one.

Such clearing of bits in match register 98 may be accomplished utilizing EXCLUSIVE-OR gate 94 and AND gate 96, connected as illustrated in Figure 3.

Thereafter, the process determines whether or not there are additional tag bits to compare, as illustrated at block 124. If there are additional tag bits to compare, the process increments tag bit counter 92, as depicted at block 126, and reads the next column of tag data from the tag portion 80 of each row, as illustrated at block 128. Thereafter, the process passes to block 122, and match register 98 may again be modified, as discussed above. If there are no additional tag bits to compare, the process passes to block 130, which depicts the process of writing the contents of match register 98 to the status portion 82 of each row in cache memory array 68. Since the status portion 82 of cache memory array 68 indicates which rows are valid, the validity status of the data stored in cache memory array 68 may be updated by a single write to the status portion 82 of cache memory array 68. Thereafter, the process terminates, as illustrated at block 132.

Upon reference to the foregoing, those persons skilled in the art will appreciate with this method for efficiently invalidating selected data stored in a cache memory array, the efficiency of such a selective invalidation operation has been greatly enhanced by reducing the number of memory accesses performed while locating rows that will be invalidated in the cache memory array. Moreover, the status portion of the cache memory array may be updated using a single write operation.

While the invention has been particularly shown and described with reference to a preferred embodiment, it will be understood by those skilled in the art that various changes in form and detail may be made therein without departing from the scope of the invention.

## Claims

1. A cache control system for managing validity status of data stored in a cache memory array (68), said cache memory array (63) having a plurality of rows and columns, each of said rows having a tag portion (80), a status portion (82), and a data portion (84), said system comprising:
a tag register (90);
means for storing a selected search tag within said tag register (90), said selected search tag indicative of a validity status of said data portion (84) of each row;
means for reading a column of tag data from said tag portion of each row of said cache memory array;
means for logically combining said column of tag data with said selected search tag to form a column of status data indicative of a validity status of said data portion of each row in said cache memory array; and
means for writing said column of status data to a column within said status portion of each row of said cache memory array, whereby said validity status of each data portion within each row of said cache memory array may be indicated by a single write to said cache memory array.

2. A cache control system as claimed in Claim 1 wherein said means for logically combining said column of tag data with said selected search tag to form a column of status data indicative of validity status of said data portion of each row in said cache memory array further comprises:
a match register for storing a selected number of bits;
means for initially setting each of said selected number of bits to a logical one;
means (94) for performing an EXCLUSIVE-OR operation with said column of tag data and said tag register to produce a result of said EXCLUSIVE-OR operation; and
means (96) for performing an AND operation with said result of said EXCLUSIVE-OR operation and said match register contents to produce said column of status data indicative of validity status of said data portion of each row in said cache memory array.

3. A cache control system as claimed in Claim 1 or Claim 2 wherein said tag portion of each row of said cache memory array and said tag register each include three bits.

4. A cache control system as claimed in any preceding claim wherein said data portion of each row in said cache memory array includes 32 bits.

5. A cache control system as claimed in any preceding claim wherein said status portion of each row in said cache memory array includes two bits.

6. A cache control system as claimed in any preceding claim wherein said means for writing said column of status data to a column within said status portion of each row of said cache memory array further comprises means for writing said column of status data to a selected column within said status portion of each row of said cache memory array.

7. A cache memory system comprising a cache control system (66) as claimed in any preceding claim and a cache memory array (68).

8. A method in a data processing system for managing validity status of data stored in a cache memory array (68), said cache memory array having a plurality of rows and columns, each of said rows having a tag portion (80), a status portion (82), and a data portion (84), said method comprising the following steps:
(a) storing a selected search tag within a tag register (90), said selected search tag indicative of a validity status of said data portion of each row;
(b) reading a column of tag data from said tag portion of each row of said cache memory array;
(c) logically combining said column of tag data with said selected search tag to form a column of status data indicative of a validity status of said data portion of each row in said cache memory array; and
(d) writing said column of status data to a column within said status portion of each row of said cache memory array, wherein said validity status of each data portion within each row of said cache memory array may be indicated by a single write to said cache memory array.

9. A method as claimed in claim 8 wherein the step of logically combining said column of tag data with said selected search tag to form a column of status data indicative of validity status of said data portion of each row in said cache memory array further comprises the steps of:
(c1) establishing a match register for storing a selected number of bits;
(c2) initially setting each of said selected number of bits to a logical one;
(c3) performing an EXCLUSIVE-OR operation with said column of tag data and said tag register to produce a result of said EXCLUSIVE-OR operation; and
(c4) performing an AND operation with said result of said EXCLUSIVE-OR operation and said match register contents to produce said column of status data indicative of validity status of said data portion of each row in said cache memory array.

10. A method as claimed in claim 8 or claim wherein said tag portion of each row of said cache memory array and said tag register each include three bits.
